# EUROPEAN PATENT APPLICATION

(11) **EP 3 770 331 A1**
(43) Date of publication of application: **27.01.2021**
(21) Application number: 19187563.2
(22) Date of filing: 22.07.2019
(51) Int. Cl.: E02F 3/36, B66F 3/08, F16H 1/16

(54) **WORM SCREW DEVICE AND METHOD FOR ASSEMBLING A WORM SCREW DEVICE**

(71) Applicant: Engcon Holding AB, 833 31 Strömsund (SE)
(72) Inventor: Kjell, HÖGBERG, 903 62 Umeå (SE)
(74) Representative: AWA Sweden AB

(57) **Abstract**

The present inventive concept relates to a worm screw device for a construction machine accessory rotator, wherein the worm screw device comprises: a worm screw comprising: a threaded portion having a first diameter; an intermediate portion having a second diameter being smaller than the first diameter; and a flange portion; a housing enclosing the flange portion and at least part of the intermediate portion, wherein the housing terminates at the intermediate portion of the worm screw; a radial bearing arranged within the housing and abutting the worm screw and the housing; and a thrust bearing arranged within the housing and abutting the worm screw and the housing.

## Description

### Technical field

The inventive concept described herein generally relates to worm screw devices for construction machine accessory rotators.

### Background

Construction machine accessory rotators, such as tiltrotators, which allow an accessory of the construction machine to be used in a diverse manner, are known in the art. Such accessory rotators may provide rotation and tilt of the accessory, and thus also improved maneuverability of the same.

A worm screw arrangement is commonly implemented in the machine accessory rotator. In construction machines in particular, the worm screw arrangement need to be able to endure high torque and frictional forces. As a result, during use, some parts of the worm screw arrangement heat up to temperatures causing lubricating grease to lose some of its lubricating properties. Furthermore, the high temperatures may cause cracking of some parts of the worm screw arrangement.

There is a need for improved worm screw devices for construction machine accessory rotators.

### Summary of the invention

It is an object of the present inventive concept to mitigate, alleviate or eliminate one or more of the above-identified deficiencies in the art and disadvantages singly or in combination.

According to a first aspect of the inventive concept, these and other objects are achieved in full, or at least in part, a worm screw device for a construction machine accessory rotator, wherein the worm screw device comprises: a worm screw comprising a threaded portion having a first diameter, an intermediate portion having a second diameter being smaller than the first diameter, and a flange portion; a housing enclosing the flange portion and at least part of the intermediate portion, wherein the housing terminates at the intermediate portion of the worm screw; a radial bearing arranged within the housing and abutting the worm screw and the housing; and a thrust bearing arranged within the housing and abutting the worm screw and the housing.

In general, the inventive concept is based on the realization that the arrangement of a worm screw comprising a threaded portion with a first diameter, and an intermediate portion with a second diameter being smaller than the first diameter, allow for a flange portion having a decreased diameter with respect to conventional worm screw devices in which the intermediate portion has a diameter equal to a diameter of the threaded portion. The decreased diameter of the flange portion may provide for a decreased tangential speed, and thus decreased friction between the thrust bearing, and the flange portion and housing respectively.

A further advantage of the present inventive concept is that a less power may be required to drive the worm screw device, owing to the decreased friction and hence increased thermal efficiency. Hereby, a less powerful driving unit may be required, compared to conventional worm screw arrangements.

The worm screw device may extend substantially along a main axis. In particular, the worm screw may extend along a main axis.

The first diameter of the threaded portion may be defined as the major diameter of the threaded portion, i.e. the diameter measured at the crest of the threads.

The housing may form a cavity for lubricating fluid. Hereby, a lubricating fluid may be used to lubricate and distribute heat within the cavity and any parts in connection with the cavity. Since the housing terminates at the intermediate portion, it is further possible to contain the lubricating fluid to the flange portion, and e.g. the thrust bearing, and optionally to at least part of the intermediate portion, and e.g. the radial bearing. Hence, lubricating grease may still be applied to the threaded portion of the worm screw, which is not in communication with the cavity. Lubricating fluid may also provide for lower friction at the radial bearing and thrust bearing.

The housing may comprise a first housing part and a second housing part, wherein the first housing part and the second housing part are separate parts attached to each other. The first housing part and the second housing part may be configured to be separated from each other. Hereby, assembly of the worm screw device may be facilitated. The assembly of the worm screw device will be further discussed in the detailed description of the present disclosure.

The first housing part may comprise a first opening arranged at a first end of the first housing part, and a second opening arranged at a second end of the first housing part being opposite the first end of the first housing part, wherein the first opening and second opening forms a through-hole in the first housing part. In particular, the first opening may have a diameter being equal to or greater than the second diameter of the intermediate portion, thus allowing the intermediate portion to be received through the first opening. Furthermore, the second opening may have a diameter being equal to or greater than a third diameter of the flange portion, thus allowing the flange portion to be inserted into the first housing part via the second opening. The first end and second end of the first housing part may be arranged at opposite ends of the first housing part with respect to the main axis.

The flange portion and the threaded portion may be separate parts attached to each other. The flange portion and the threaded portion may be configured to be separated from each other. Hereby, assembly of the worm screw device may be facilitated. The flange portion and the threaded portion may be arranged coaxially along the main axis. The intermediate portion may be integral to any of the threaded portion and flange portion.

The worm screw device may further comprise a securing arrangement configured to secure the flange portion to the threaded portion. The securing arrangement may be further configured to secure the worm screw to the housing. In particular, the securing arrangement may be configured to secure the worm screw to the second housing part. The securing arrangement may comprise a threaded bolt extending within the housing coaxially with the worm screw. The threaded bolt may engage with a corresponding inner groove arranged in the worm screw. In particular, the inner groove may be arranged on the intermediate portion and/or the threaded portion.

Furthermore, the securing arrangement may extend through a through hole in the flange portion, and be mechanically coupled to the housing, e.g. the second housing part, and to the threaded portion of the worm screw. The through hole in the flange portion may extend along the main axis.

The flange portion may have a third diameter being larger than the second diameter of the intermediate portion. Hereby, the flange portion may be provided with an annular surface which may engage with e.g. a thrust bearing. Furthermore, since the third diameter of the flange portion is larger than the second diameter of the intermediate portion, insertion of the flange portion into the housing may be facilitated. The third diameter of the flange portion may be equal to or smaller than a first diameter of the threaded portion of the worm screw.

The thrust bearing may comprise a first thrust washer and a second thrust washer, wherein the housing comprises a first thrust seat engaged with the first thrust washer, and a second thrust seat engaged with the second thrust washer. The first thrust seat may be arranged on the first housing part, and the second thrust seat may be arranged on the second housing part.

The flange portion may comprise a third thrust seat engaged with the first thrust washer, and a fourth thrust seat engaged with the second thrust washer. The third thrust seat and fourth thrust seat may be arranged on opposing sides of the flange portion with respect to the main axis.

The radial bearing may comprise a sleeve, wherein the housing comprises a first radial seat engaged with the sleeve, and the intermediate portion comprises a second radial seat engaged with the sleeve. The first radial seat may be an inner surface of the housing. In particular, the first radial seat may be arranged in the first housing part. The second radial seat of the intermediate portion may be an outer surface of the intermediate portion.

The worm screw may comprise a proximal end and a distal end along the main axis, wherein the threaded portion is arranged at the distal end, and the flange portion is arranged at the proximal end, and the intermediate portion is arranged between the threaded portion and the flange portion.

The housing may comprise an opening which encloses the intermediate portion. An interface between the opening and the intermediate portion may be sealed. Hereby, lubricating fluid held within the cavity of the housing may be prevented from leaking out of the cavity. The opening may be referred to as a 'first opening' of the first housing part throughout the present disclosure.

According to a second aspect of the inventive concept, these and other objects are achieved in full, or at least in part, a method for assembling a worm screw, wherein the method comprises the steps of: bringing a thrust bearing into abutment with a first housing part; bringing a radial bearing into abutment with the first housing part; bringing a flange portion of a worm screw into abutment with the thrust bearing; attaching a second housing part to the first housing part, thus bringing the thrust bearing into abutment with the second housing part; and attaching a threaded portion of the worm screw to the flange portion.

The method may further comprise attaching an outer casing to the first housing part and/or the second housing part, wherein the outer casing encloses the threaded portion of the worm screw. The outer casing may contain a lubricating grease within a second cavity enclosing the threaded portion of the worm screw.

The first housing part may comprise a first opening arranged in a first end of the first housing part, and a second opening arranged in a second end of the first housing part being opposite the first end of the first housing part, wherein the first opening and second opening forms a through-hole in the first housing part; and the method may further comprise: inserting the thrust bearing into the first housing part via the first opening; inserting the flange portion into the first housing part via the first opening; and wherein the attachment of the threaded portion of the worm screw to the flange portion is made through the second opening. Hereby, it is possible to assemble the worm screw device while e.g. having a flange portion having a third diameter being equal to or smaller than a first diameter of the threaded portion of the worm screw.

The method may further comprise filling at least part of a cavity formed by the first housing part and the second housing part with lubricating fluid. The cavity may be filled via a port in the housing, i.e. the first and/or second housing part.

A feature described in relation to one aspect may also be incorporated in other aspects, and the advantage of the feature is applicable to all aspects in which it is incorporated.

Other objectives, features and advantages of the present inventive concept will appear from the following detailed disclosure, from the attached claims as well as from the drawings.

Generally, all terms used in the claims are to be interpreted according to their ordinary meaning in the technical field, unless explicitly defined otherwise herein. Further, the use of terms "first", "second", and "third", and the like, herein do not denote any order, quantity, or importance, but rather are used to distinguish one element from another. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief description of the drawings

The above, as well as additional objects, features and advantages of the present inventive concept, will be better understood through the following illustrative and non-limiting detailed description of different embodiments of the present inventive concept, with reference to the appended drawings, wherein:
FIG. 1 schematically illustrates a worm screw arrangement according to the prior art in a cross-sectional view;
FIG. 2 schematically illustrates an embodiment of a worm screw device in a cross-sectional view;
FIG. 3 schematically illustrates the embodiment of FIG. 2 and an outer casing in a cross-sectional view;
FIG. 4 schematically illustrates a radial bearing in a perspective view;
FIG. 5 schematically illustrates part of a thrust bearing in a perspective view; and
FIG. 6 schematically illustrates the embodiment of FIG. 2 implemented in a construction machine accessory rotator.

The figures are not necessarily to scale, and generally only show parts that are necessary in order to elucidate the inventive concept, wherein other parts may be omitted or merely suggested.

### Detailed description

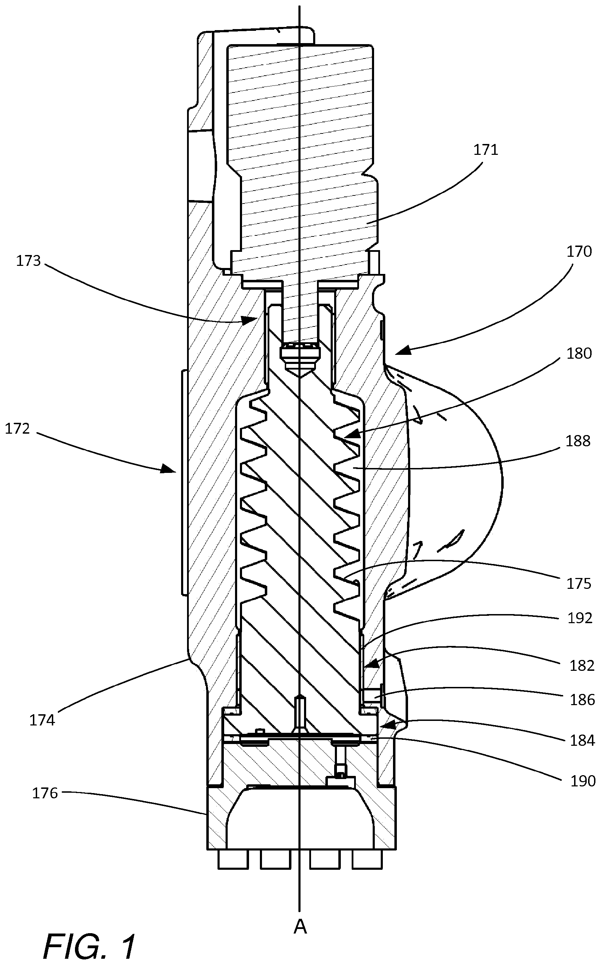

FIG. 1 schematically illustrates a worm screw arrangement 170 according to the prior art in a cross-sectional view. The worm screw arrangement 170 extends along a main axis A. A driving unit 171 is arranged at a distal end 173 of a worm screw 175. The worm screw arrangement 170 comprises a housing 172, here comprising a first housing part 174 and a second housing part 176. The housing 172 completely encloses the worm screw 175, i.e. the housing 172 encloses a threaded portion 180, an intermediate portion 182, and a flange portion 184 of the worm screw 175. A port 186 is arranged in a wall of the housing 172 to allow lubricating grease to enter a cavity 188 formed by the housing 172. The lubricating grease can then lubricate the flange portion 184 and a thrust bearing 190 engaged with the flange portion 184, the intermediate portion 182 and a radial bearing 192 engaged with the intermediate portion 182, and the threaded portion 184.

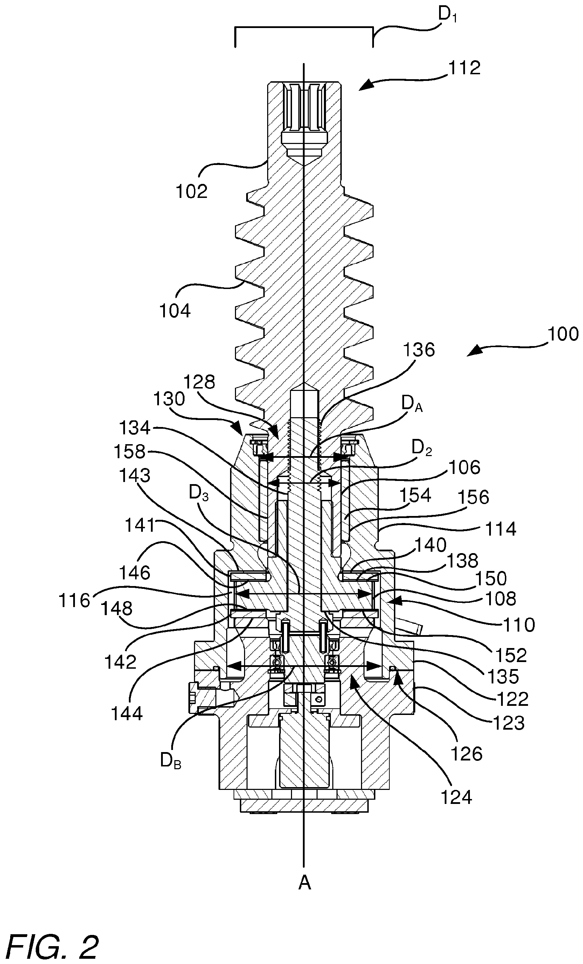

Referring now to FIG. 2, a worm screw device 100 according to the inventive concept is shown in a cross-sectional view. The worm screw device 100 extends along a main axis A. The worm screw device comprises a worm screw 102, comprising a threaded portion 104 having a first diameter D₁, an intermediate portion 106 having a second diameter D₂ being smaller than the first diameter D₁, and a flange portion 108. The worm screw 102 extends along the main axis A, and has a proximal end 110 and a distal end 112 along the main axis A. The flange portion 108 is arranged at the proximal end 110, and the threaded portion 104 is arranged at the distal end 112. The intermediate portion 106 is integral with the threaded portion 104 and is arranged between the threaded portion 104 and the flange portion. Alternatively, the intermediate portion may be integral with the flange portion 108.

A housing 114 encloses the flange portion 108 and at least part of the intermediate portion 106. The housing comprises a first housing part 122 and a second housing part 123. The housing 114 forms a cavity 116 for lubricating fluid. Furthermore, the housing 114 terminates at the intermediate portion 106 of the worm screw 102. In other words, the housing 114 does not completely enclose the worm screw 102. An interface between the housing 114 and the worm screw 102 is sealed to prevent fluid, such as lubricating fluid, to exit the cavity 116. The cavity 116 provides for that lubricating fluid can reach at least the flange portion 108, a thrust bearing 140, and a radial bearing 154.

The worm screw device 100 further comprises a radial bearing 154 arranged within the housing 114, more particularly within the first housing part 122, and abutting the worm screw 102 and the housing 114. The worm screw device 100 further comprises a thrust bearing 140 arranged within the housing 114, e.g. arranged within the first housing part 122, and abutting the worm screw 102 and the housing 114.

The first housing part 122 comprises a first opening 124 arranged at a first end 126 of the first housing part 122, and a second opening 128 arranged at a second end 130 of the first housing part 122 being opposite the first end 126 of the first housing part 122. The first opening 124 and second opening 128 forms a through-hole in the first housing part 122. In particular, the second opening 128 has a diameter D_{A} being equal to or greater than the second diameter D₂ of the intermediate portion 109, thus allowing the intermediate portion 109 to be received through the second opening 128. The diameter D_{A} is furthermore smaller than the first diameter D₁ of the threaded portion and a third diameter D₃ of the flange portion. Furthermore, the first opening 124 has a diameter D_{B} being equal to or greater than the third diameter D₃ of the flange portion 108, thus allowing the flange portion 108 to be inserted into the first housing part 122 via the second opening 128. The first end 126 and second end 130 of the first housing part 122 are be arranged at opposite ends of the first housing part 122 with respect to the main axis A.

The flange portion 108 and the threaded portion 104 are here separate parts attached to each other at least partly via a securing arrangement 134. Furthermore, the intermediate portion 106 is attached to the flange portion 108 via corresponding threading on the intermediate portion 106 and the flange portion 108 respectively. This threading is left-handed, while the threading on the securing arrangement 134 is right-handed. Thus, the worm screw 102 is prevented from being released by operating the worm screw device 100. The flange portion 108 and the threaded portion 104 are arranged coaxially along the main axis A. The intermediate portion is here integral to the threaded portion 104.

The securing arrangement 134 here comprises a threaded bolt 134 extending within the housing 114 coaxially with the worm screw 102. The threaded bolt 134 engages with a corresponding inner groove 136 arranged in the worm screw 102. In particular, the inner groove 136 is arranged on the intermediate portion 106. Alternatively, the inner groove 136 may be arranged on the threaded portion 104.

The worm screw device 100 here further comprises an angle sensor configured to sense a position of the worm screw 102 about the main axis A. The angle sensor is arranged in the second housing part 123, and is connected to the securing arrangement 134.

Furthermore, the securing arrangement 134 extends through a through hole in the flange portion 108, and is mechanically coupled to the threaded portion 104 of the worm screw 102. The through hole in the flange portion extends along the main axis A. The threaded bolt 134 comprises a securing flange 135 which engages with the flange portion 108. Hence, when the threaded bolt 134 is secured into the inner groove 136 of the worm screw 102, the flange portion 108 and the threaded portion 102 are forced together. As discussed above, the intermediate portion 106 is also attached to the flange portion 108 via corresponding threading on the intermediate portion 106 and the flange portion 108 respectively.

The flange portion 108 has have a third diameter D₃ being larger than the second diameter D₂ of the intermediate portion 106. Hereby, the flange portion 108 is be provided with an annular surface 138 which may engage with e.g. a thrust bearing 140. Furthermore, since the third diameter D₃ of the flange portion 108 is larger than the second diameter D₂ of the intermediate portion 106, insertion of the flange portion 108 into the housing 114 may be facilitated. The third diameter D₃ of the flange portion 108 is equal to or smaller than a first diameter D₁ of the threaded portion 104 of the worm screw 102.

The worm screw device 100 further comprises a thrust bearing 140, which comprises a first thrust washer 141 and a second thrust washer 142, wherein the housing 114 comprises a first thrust seat 143 engaged with the first thrust washer 141, and a second thrust seat 144 engaged with the second thrust washer 142. The first thrust seat 143 is arranged on the first housing part 122, and the second thrust seat 144 is arranged on the second housing part 123.

The flange portion 108 comprises a third thrust seat 146 engaged with the first thrust washer 141, and a fourth thrust seat 148 engaged with the second thrust washer 142. The third thrust seat 146 and fourth thrust seat 148 is arranged on opposing sides of the flange portion 108 with respect to the main axis A, such as on a first major side 150 of the flange portion 108 and a second major side 152 of the flange portion 108 opposed to the first major side 150.

The worm screw device 100 further comprises a radial bearing 154, which comprises a sleeve 154, wherein the housing 114 comprises a first radial seat 156 engaged with the sleeve 154, and the intermediate portion 106 comprises a second radial seat 158 engaged with the sleeve 154. The first radial seat 156 is an inner surface of the housing 114. In particular, the first radial seat 156 is arranged in the first housing part 122. The second radial seat 158 of the intermediate portion 106 is an outer surface of the intermediate portion 106.

The worm screw 102, i.e. the threaded portion 104, the intermediate portion 106, and the flange portion 108, and the first housing part 122 and the second housing part 123 is arranged coaxially with respect to the main axis A. Furthermore, the securing arrangement 134 is arranged coaxially with the worm screw 102.

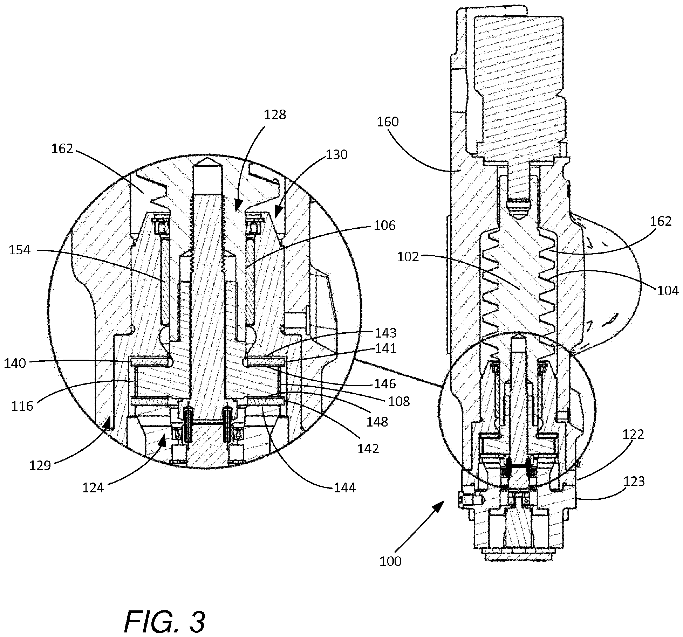

Referring now to FIG. 3, a worm screw device 100 comprising an outer casing 160 is illustrated in a cross-sectional view. The outer casing 160 is attached to either or both of the first housing part 122 and the second housing part 123. The outer casing 160 forms a second cavity 162, which is sealed off from the cavity 116. Hence, lubricating grease is contained within the second cavity 162 to lubricate the threaded portion 104 of the worm screw 102.

Still referring to FIG. 3, a method for assembling the worm screw device 100 will now be described. It is to be understood that the steps referred to in the following sections does not necessarily have to performed in the disclosed order. The person skilled in the art readily understood which alternative order of steps are possible within the scope of the present inventive concept. In particular, the first thrust washer may either be inserted into the first housing part before inserting the flange portion into the first housing part, or the first thrust washer may be brought into abutment with the flange portion outside of the first housing part before inserting the assembled unit of flange portion and first thrust washer together into the first housing part. Similar variations in the order of steps are envisioned.

The method may further comprise the steps of bringing a thrust bearing 140 into abutment with a first housing part 122, and bringing a radial bearing 154 into abutment with the first housing part 122. A flange portion 108 of a worm screw 102 is brought into abutment with the thrust bearing 140. In particular, the method comprises bringing a first thrust washer 141 into abutment with a first thrust seat 143 arranged on the first housing part 122, bringing a third thrust seat 146 of the flange portion 108 of the worm screw 102 into abutment with the first thrust washer 141, and bringing a second thrust washer 142 into abutment with a fourth thrust seat 148 arranged on the flange portion 108.

A second housing part 123 is attached to the first housing part 122, thus bringing the thrust bearing 140 into abutment with the second housing part 123, such as bringing the second thrust washer 142 into abutment with a second thrust seat 144 arranged on the second housing part 123. A threaded portion 104 of the worm screw 102 is attached to the flange portion 108. The attachment of the treaded portion 104 to the flange portion 108 causes the intermediate portion 106 to be brought into abutment with the radial bearing 154.

The method may further comprise attaching an outer casing 160 to the first housing part 122 and/or the second housing part 123, wherein the outer casing 160 encloses the threaded portion 104 of the worm screw 102. The outer casing 160 is configured to contain a lubricating grease within a second cavity 162 enclosing the threaded portion 104 of the worm screw 102.

In particular, the assembled worm screw device 100 can be removed from the outer casing 160 without taking apart the worm screw device 100, i.e. without compromising the cavity 116. Hereby, lubricant fluid can be kept within the cavity 116 even if the worm screw device 100 is removed from the outer casing 160. This facilitates installation and maintenance of the worm screw device 100, and other parts of the accessory in which the worm screw device 100 is cooperation with.

The first housing part 122 comprises a first opening 124 arranged at a first end 129 of the first housing part 122, and a second opening 128 arranged at a second end 130 of the first housing part 122 being opposite the first end 129 of the first housing part 122, wherein the first opening 124 and second opening 128 forms a through-hole in the first housing part 122, and the method may further comprise inserting the thrust bearing 140 into the first housing part 122 via the first opening 124, inserting the flange portion 108 into the first housing part 122 via the first opening 124. Attachment of the threaded portion 104 of the worm screw 102 to the flange portion 108 is made through the second opening 128.

The method may further comprise filling at least part of a cavity 116 formed by the first housing part 122 and the second housing part 123 with lubricating fluid. The cavity 116 is filled via a port in the housing, i.e. the first and/or second housing part 122,123.

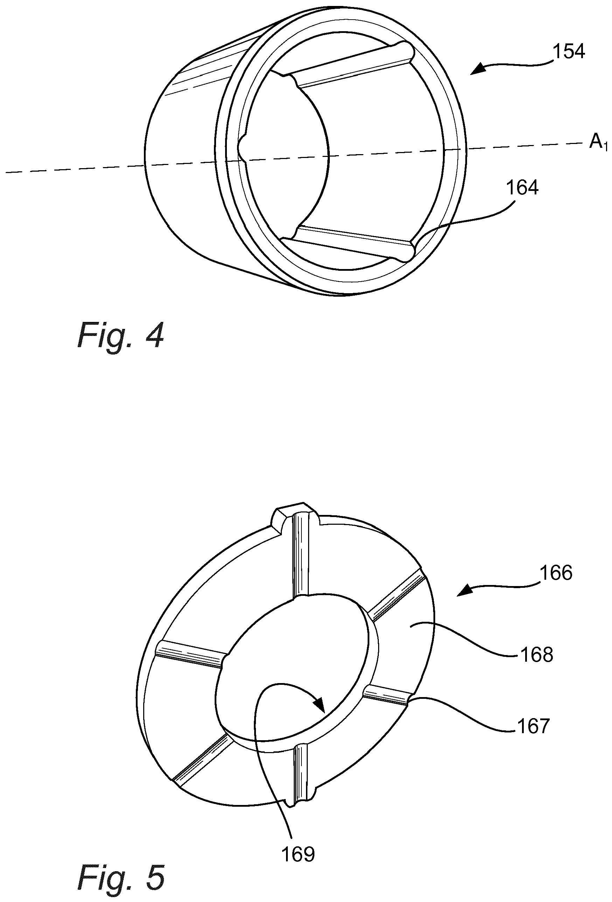

Referring now to FIG. 4, a radial bearing 154 is illustrated in a perspective view. The radial bearing 154 comprises a number of axial grooves 164 extending along either or both of an inner and outer surface of the radial bearing 154. The axial grooves 164 extend along a symmetry axis A₁ of the radial bearing 154. In the illustrated case, the radial bearing 154 is a sleeve, having several axial grooves 164. The number of axial grooves 164 may provide for that lubricating fluid is able to circulate within the cavity, in which the radial bearing 154 is arranged. Furthermore, the number of axial grooves 164 may provide for that lubricating fluid can pass in the interface between the worm screw and the radial bearing, and/or in the interface between the radial bearing and the housing. It is envisioned that the radial bearing 154 may comprise one axial groove, or several axial grooves.

Referring now to FIG. 5, part of a thrust bearing 166 is illustrated in a perspective view. In particular, a single thrust washer 166, forming part of a thrust bearing, is illustrated. The thrust washer 166 comprises a number of radial grooves 167 extending along either or both of a first major surface 168 and a second major surface 169, being opposite the first major surface 168. The one or more radial grooves 167 may provide for that lubricating fluid is able to circulate within the cavity, in which the thrust washer 166 is arranged. Furthermore, the number of radial grooves 167 may provide for that lubricating fluid can pass in the interface between the flange portion and the thrust bearing, and/or in the interface between the thrust bearing and the housing. It is envisioned that the thrust washer may comprise one radial groove, or several radial grooves. Furthermore, the thrust bearing preferably comprises at least two thrust washers.

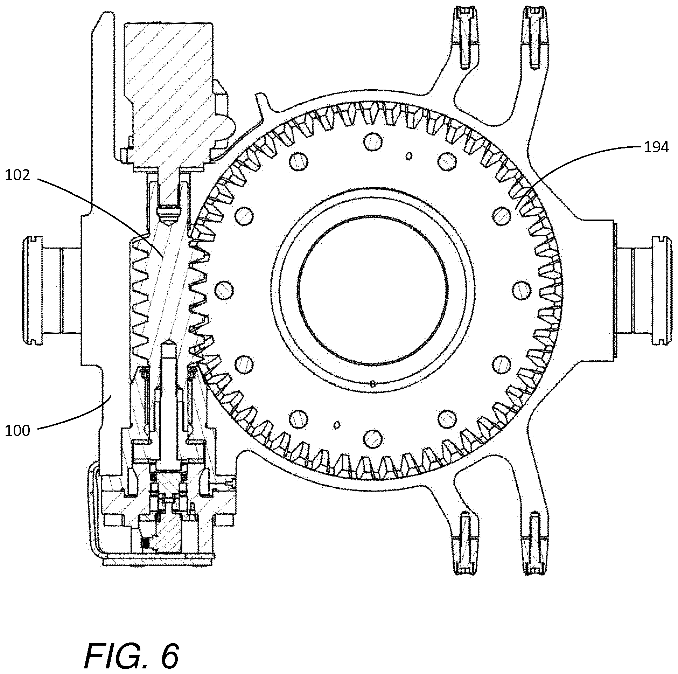

Referring now to FIG. 6, a worm screw device 100 is illustrated in a cross-sectional view perpendicular to the view shown in FIG. 2. The illustrated view shows the worm screw 102 being engaged with and configured to turn a gear 194, wherein the threads 196 of the worm screw device 100 are engaged with cogs 198 of the gear 194.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

### List of reference signs

- A: Main axis
- A₁: Symmetry axis
- D₁: Diameter of threaded portion
- D₂: Diameter of intermediate portion
- D₃: Diameter of flange portion
- D_{A}: Diameter of second opening
- D_{B}: Diameter of first opening
- 100: Worm screw device
- 102: Worm screw
- 104: Threaded portion
- 106: Intermediate portion
- 108: Flange portion
- 110: Proximal end
- 112: Distal end
- 114: Housing
- 116: Cavity
- 122: First housing part
- 123: Second housing part
- 124: First opening
- 126: First end of first housing part
- 128: Second opening
- 130: Second end of first housing part
- 134: Securing arrangement, threaded bolt
- 135: Securing flange
- 136: Inner groove
- 138: Annular surface
- 140: Thrust bearing
- 141: First thrust washer
- 142: Second thrust washer
- 143: First thrust seat
- 144: Second thrust seat
- 146: Third thrust seat
- 148: Fourth thrust seat
- 150: First major side of flange portion
- 152: Second major side of flange portion
- 154: Radial bearing, sleeve
- 156: First radial seat
- 158: Second radial seat
- 160: Outer casing
- 162: Second cavity
- 164: Axial groove
- 166: Thrust washer
- 167: Radial groove
- 168: First major surface of thrust washer
- 169: Second major surface of thrust washer
- 170: Worm screw arrangement
- 171: Driving unit
- 172: Housing
- 173: Distal end
- 174: First housing part
- 175: Worm screw
- 176: Second housing part
- 180: Threaded portion
- 182: Intermediate portion
- 184: Flange portion
- 186: Port
- 188: Cavity
- 190: Thrust bearing
- 192: Radial bearing
- 194: Gear

## Claims

1. A worm screw device for a construction machine accessory rotator, wherein the worm screw device comprises:
a worm screw comprising:
a threaded portion having a first diameter;
an intermediate portion having a second diameter being smaller than the first diameter; and
a flange portion;
a housing enclosing the flange portion and at least part of the intermediate portion, wherein the housing terminates at the intermediate portion of the worm screw;
a radial bearing arranged within the housing and abutting the worm screw and the housing; and
a thrust bearing arranged within the housing and abutting the worm screw and the housing.

2. The worm screw device according to claim 1, wherein the housing forms a cavity for lubricating fluid.

3. The worm screw device according to claim 1 or 2, wherein the housing comprises a first housing part and a second housing part, wherein the first housing part and the second housing part are separate parts attached to each other.

4. The worm screw device according to any one of the preceding claims, wherein the flange portion and the threaded portion are separate parts attached to each other.

5. The worm screw device according to claim 4, further comprising a securing arrangement configured to secure the flange portion to the threaded portion.

6. The worm screw device according to any one of the preceding claims, wherein the flange portion has a third diameter being larger than the second diameter of the intermediate portion.

7. The worm screw device according to any one of the preceding claims, wherein the thrust bearing comprises a first thrust washer and a second thrust washer, wherein the housing comprises a first thrust seat engaged with the first thrust washer, and a second thrust seat engaged with the second thrust washer.

8. The worm screw device according to claim 7, wherein the flange portion comprises a third thrust seat engaged with the first thrust washer, and a fourth thrust seat engaged with the second thrust washer.

9. The worm screw device according to any one of the preceding claims, wherein the radial bearing comprises a sleeve, wherein the housing comprises a first radial seat engaged with the sleeve, and the intermediate portion comprises a second radial seat engaged with the sleeve.

10. The worm screw device according to any one of the preceding claims, wherein the worm screw comprises a proximal end and a distal end, wherein the threaded portion is arranged at the distal end, and the flange portion is arranged at the proximal end, and the intermediate portion is arranged between the threaded portion and the flange portion.

11. The worm screw device according to any one of the preceding claims, wherein the housing comprises an opening which encloses the intermediate portion.

12. A method for assembling a worm screw device, wherein the method comprises the steps of:
bringing a thrust bearing into abutment with a first housing part;
bringing a radial bearing into abutment with the first housing part;
bringing a flange portion of a worm screw into abutment with the thrust bearing;
attaching a second housing part to the first housing part, thus bringing the thrust bearing into abutment with the second housing part; and
attaching a threaded portion of the worm screw to the flange portion.

13. The method according to claim 12, further comprising attaching an outer casing to the first housing part and/or the second housing part, wherein the outer casing encloses the threaded portion of the worm screw.

14. The method according to claim 12 or 13, wherein the first housing part comprises a first opening arranged at a first end of the first housing part, and a second opening arranged at a second end of the first housing part being opposite the first end of the first housing part, wherein the first opening and second opening forms a through-hole in the first housing part; and
wherein the method further comprises:
inserting the thrust bearing into the first housing part via the first opening;
inserting the flange portion into the first housing part via the first opening; and
wherein the attachment of the threaded portion of the worm screw to the flange portion is made through the second opening.

15. The method according to claim 14, further comprising filling at least part of a cavity formed by the first housing part and the second housing part with lubricating fluid.
